# EUROPEAN PATENT SPECIFICATION

(11) **EP 2 895 002 B1**
(45) Date of publication and mention of the grant of the patent: **06.09.2017**
(21) Application number: 13759185.5
(22) Date of filing: 06.09.2013
(51) Int. Cl.: A23C 15/02, A23L 35/00, A23D 7/02, A01J 15/12, A23D 7/015

(54) **METHOD, USE AND APPARATUS FOR CONTINUOUS REVERSAL OR BREAKING OF AN OIL-IN-WATER EMULSION FOOD PRODUCT BY MEANS OF HYDRODYNAMIC CAVITATION**
VERFAHREN, VERWENDUNG UND VORRICHTUNG FÜR KONTINUIERLICHE UMKEHRUNG ODER BRECHUNG EINES Ö-IN-WASSER-EMULSIONSLEBENSMITTELPRODUKTES MITTELS HYDRODYNAMISCHER KAVITATION
PROCÉDÉ, UTILISATION ET APPAREIL DESTINÉS À INVERSER OU À CASSER EN CONTINU UN PRODUIT ALIMENTAIRE À ÉMULSION HUILE-DANS-L'EAU AU MOYEN D'UNE CAVITATION HYDRODYNAMIQUE

(30) Priority: 14.09.2012 DK 201200566
(43) Date of publication of application: 22.07.2015
(73) Proprietor: SPX Flow Technology Danmark A/S, 8600 Silkeborg (DK)
(72) Inventor: KJØLBY, Christian, DK-8270 Højbjerg (DK); PEDERSEN, Bent, DK-8270 Højbjerg (DK); RIIS, Claus, DK-8600 Silkeborg (DK)
(74) Representative: Nordic Patent Service A/S
(86) International application number: PCT/EP2013/068443
(87) International publication number: WO 2014/040918

(56) References cited:
- EP-A1- 0 199 398
- EP-A2- 0 396 170
- DE-A1- 2 110 575
- DE-C1- 3 529 677
- GB-A- 2 084 171
- US-A- 2 033 121
- US-A- 3 332 615
- KAMMERLEHNER J: "Butter granule formation - a complex process. (translated)", DMZ. LEBENSMITTELINDUSTRIE UND MILCHWISSENSCHAFT, VOLKSWIRTSCHAFTLICHER VERLAG GMBH. MUNCHEN, DE, vol. 115, no. 9, 1 August 1994 (1994-08-01), pages 428-431, XP008165756, ISSN: 0938-9369

## Description

### FIELD OF THE INVENTION

The present invention relates generally to reversing or breaking an oil-in-water emulsion food products. More particularly, the present invention relates to a method and an apparatus for reversing or breaking an oil-in-water emulsion food product.

### BACKGROUND OF THE INVENTION

Conventional methods for breaking or reversing an oil-in-water emulsion food products are e.g. used in the making of butter.
In known methods, the cream (oil-in-water emulsion) is fed into a churning cylinder fitted with beaters that are driven by a variable speed motor.
Breaking up of the cream takes place in the cylinder and, when finished, the butter grains and buttermilk (that are now separate emulsions) pass on to a draining section. The first washing of the butter grains sometimes takes place en route - either with water or recirculated chilled buttermilk. The working of the butter commences in the draining section by means of a screw, which also conveys it to the next stage.
On leaving the working section, the butter passes through a conical channel to remove any remaining buttermilk. Immediately afterwards, the butter may be given its second washing, this time by two rows of adjustable highpressure nozzles. The water pressure is so high that the ribbon of butter is broken down into grains and consequently any residual milk solids are effectively removed.
In the final or mixing section the butter passes a series of perforated disks and star wheels. There is also an injector for final adjustment of the water content. Once regulated, the water content of the butter deviates less than +/- 0.1%, provided the characteristics of the cream remain the same.
The finished butter is discharged in a continuous ribbon from the end nozzle of the machine and then into the packaging unit. EP 0 199 398 A1 discloses an apparatus and a method for the continuous reversal of an oil-in-water emulsion food product, the method comprising feeding a flow of tempered oil-in-water emulsion into a heat exchanger 1 having a stator 3 and a rotor 2, agitating the tempered oil-in-water emulsion food product inside said heat exchanger 1, thereby reversing the oil-in-water emulsion food product to a water-in-oil emulsion food product and discharging a reversed water-in-oil emulsion food product from the heat exchanger 1. US 3,332,615 discloses an apparatus and method for separating cream from milk. The concentrated cream is further processed by the apparatus by exposure to cavitation in order to produce butter oil and butter milk as separate products. This apparatus is relatively complicated and focused on producing butter oil, i.e. the watery contend of the cream is removed to a large extent from the oily part.

Accordingly, it is desirable to provide a method and an apparatus that is simpler and less costly than known technologies. Further, it is desirable to provide a completely new process for making products such as low fat butter, butter blends, low fat spreads and butter by emulsion breakage or reversal, by keeping substantially all of the watery product in the oily product, i.e. without separating the oily product and the watery product.

### SUMMARY OF THE INVENTION

The present invention offers a new simpler way of reversing or breaking oil-in-water emulsion food products where the oily product and the watery product that go into the process are together in one emulsion at the outcome of the process, in order to produce e.g. low fat spread thus eliminating the butter fat production step and subsequent addition to a low fat butter emulsion.
The foregoing needs are met, to a great extent, by the embodiments of the present invention.
In one aspect a method is provided for continuous reversal or breaking of an oil-in-water emulsion food product. In an embodiment the method comprises feeding a continuous flow of tempered oil-in-water emulsion food product into a cavitator with a cavitator disk that is rotatably suspended inside a cavitation chamber, causing cavitation in the tempered oil-in-water emulsion food product inside the cavitator thereby breaking the oil-in-water emulsion food product or thereby reversing the oil-in-water emulsion food product to a water-in-oil emulsion food product, and discharging a continuous flow of broken oil-in-water emulsion food product or a continuous flow of reversed water-in-oil emulsion food product out of the cavitator. Thus, a continuous flow of a low fat reversed or broken emulsion food product is the only product coming out of the cavitator and because the watery part has not been separated from the oily part the resulting food product emulsion has a high water content and thus a low fat content.

According to another aspect, the tempered oil-in-water emulsion that is fed to the cavitator is reversed into water-in-oil emulsion by hydrodynamic cavitation inside the cavitator and a single continuous flow of water-in-oil emulsion is produced with the cavitator.

According to another aspect, the tempered oil-in-water emulsion that is fed to the cavitator is broken inside the cavitator and the liquid discharged from the cavitator has an oily liquid component and a watery liquid component that are not dispersed in one another.

According to another aspect, the method further comprising adding and mixing vegetable oil into the emulsion either before or after the reversal in order to create a more flat crystallization profile of the resulting emulsion.

According to another aspect, the continuous flow of water-in-oil emulsion coming out of the cavitator is cooled.

According to another aspect, the oil-in-water emulsion that is pumped into the cavitator is pasteurized before entering the cavitator.

According to another aspect, the backpressure of the emulsion leaving the cavitator is within the range of 0,5 to 7,5 bar, preferably 1,5 to 5 bar.

According to another aspect, the oil-in-water emulsion that is pumped to the cavitator has a fat content in the range of 25 to 65%.
According to another aspect, the oil in the oil-in-water emulsion is an animal fat or vegetable fat or a mixture of animal fat and vegetable fat.
According to another aspect, the animal fat or vegetable fat is liquid, solid, inter-esterified, fractionated or hydrogenated.
According to another aspect, the emulsion fed to the cavitator contains water, milk, cream, and /or recombined liquids.
According to another aspect, the resulting water-in-oil emulsion is butter or margarine, preferably a low fat butter or low fat margarine.
According to another aspect, the emulsion fed to the cavitator is a cream that is broken in the cavitator into butter fat and buttermilk, and said method preferably includes further separating the flow of fluid coming from the cavitator into a continuous flow of butter and a continuous flow of buttermilk.
According to another aspect, the emulsion fed to the cavitator is a low-fat spread emulsion wherein the fat has not yet crystallized, and the low-fat spread emulsion is broken inside the cavitator. The use of cavitation instead of conventional methods, e.g. beating, for reversing or breaking an oil-in-water emulsion is simpler and less costly than known technologies.
According to an aspect, the cavitation is used in a continuous flow of oil-in-water emulsion to produce a continuous flow of broken oil-in-water emulsion or to produce a flow of water-in-oil emulsion.
In another aspect of the invention, an apparatus for reversing or breaking an oil-in-water emulsion is provided. In an embodiment the apparatus for breaking or reversing an oil-in-water emulsion comprises a source of pressurized oil-in-water emulsion, a cavitator with cavitation chamber, and with a cavitator disk that rotatably suspended inside the cavitation chamber, the cavitation chamber being provided with an inlet and with an outlet, the inlet being in fluid connection with the source of pressurized oil-in-water emulsion, a first heat exchanger for tempering a flow of oil-in-water emulsion flowing to the inlet of the cavitator, a second heat exchanger for cooling the emulsion that is discharged from the outlet of the cavitator.
According to another aspect, the cavitator is configured for breaking the oil-in-water emulsion in the cavitator chamber or configured for reversing the oil-in-water emulsion in the cavitation chamber.
According to yet another aspect, the apparatus further comprises a backpressure valve arranged downstream of the cavitator and configured for maintaining a desired backpressure at the outlet of said cavitator so that said oil-in-water emulsion is either reversed or broken in said cavitator.
According to yet another aspect, the apparatus further comprises a separator for separating a continuous flow of broken emulsion into a continuous flow of watery liquid and a continuous flow of an oily liquid.
There has thus been outlined, rather broadly, certain embodiments of the invention in order that the detailed description thereof herein may be better understood, and in order that the present contribution to the art may be better appreciated. There are, of course, additional embodiments of the invention that will be described below and which will form the subject matter of the claims appended hereto.

### BRIEF DESCRIPTION OF THE DRAWINGS

In the following detailed portion of the present description, the invention will be explained in more detail with reference to the exemplary embodiments shown in the drawings, in which:
FIG. 1 is a diagrammatic view of an apparatus for reversing or breaking an oil-in-water emulsion according to an example embodiment of the present invention,
FIG. 2 is a sectional diagrammatic view of a cavitator of the apparatus shown in FIG. 1 and an electric drive motor operably coupled to the cavitator,
FIG. 3 is a cross-sectional view of the cavitator of FIG. 1 in a first example embodiment,
FIG. 4 is a cross-sectional view of the cavitator of FIG. 1 in a second example embodiment, and
FIG. 5 is a diagrammatic view of an apparatus for reversing or breaking an oil-in-water emulsion according to FIG. 1 with an additional separator.

### DETAILED DESCRIPTION OF PREFERRED EMBODIMENTS

Example embodiments of the invention will now be described with reference to the drawing figures, in which like reference numerals refer to like parts throughout. An embodiment in accordance with the present invention provides a food apparatus for reversing or breaking an oil-in-water emulsion food product.

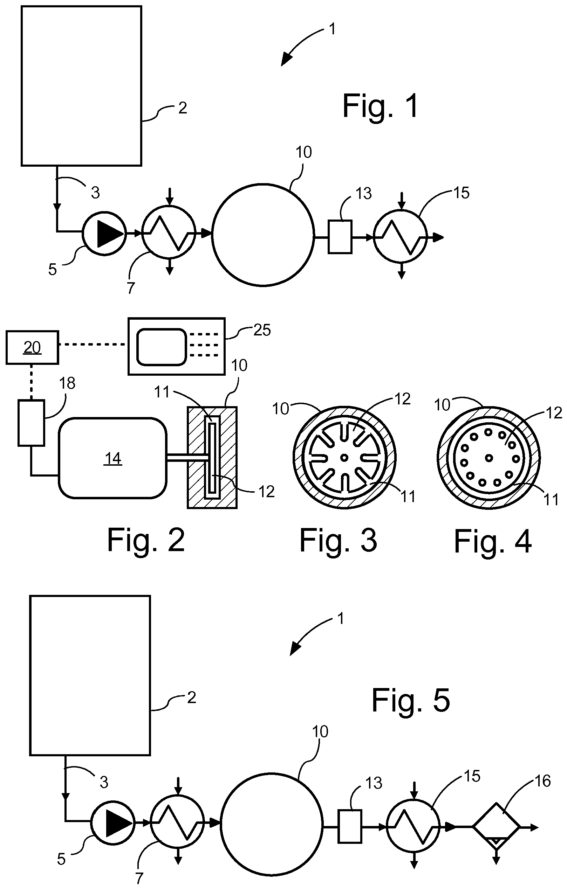

FIG. 1 illustrates an example embodiment of a food apparatus for reversing or breaking an oil-in-water emulsion food product. The food apparatus 1 may include a container 2 for holding an oil-in-water emulsion food product. In other embodiments, the oil-in-water emulsion food product may be delivered from a container that is not part of the apparatus 1. A conduit 3 connects the container 2 to the inlet of a feed pump 5. The outlet of the feed pump 5 is connected by a conduit to the inlet of a first heat exchanger 7, such as for example, but not limited to, a plate heat exchanger, tubular heat exchanger or scraped surface heat exchanger. All of the components are suitable for use with food products, i.e. the apparatus and its components are designed, fabricated, constructed, and installed according to sound sanitary design principles. This apparatus is designed and constructed so that it can be adequately cleaned and sanitized, and its surfaces are resistant to daily exposure to corrosive food products and cleaning/sanitizing chemicals.

The outlet of the first heat exchanger 7 is connected by a conduit to an inlet of a cavitator 10. An outlet of the cavitator 10 is connected by a conduit to the inlet of a second heat exchanger 15. A backpressure valve 13 is arranged in the conduit connecting the outlet of the cavitator 10 to the inlet of the second heat exchanger 15.

The second heat exchanger 15 is for example, but not limited to, a plate heat exchanger, tubular heat exchanger or scraped surface heat exchanger. The second heat exchanger 15 has an outlet that in the present embodiment forms the outlet of the apparatus 1.
In an embodiment, the described components of the apparatus 1 can be mounted on a frame or the like (not shown).
In an embodiment, temperature transmitters (sensors) are located between the first heat exchanger 7 and the cavitator and at or just after the outlet of the second heat exchanger 15. In an embodiment, a flow-meter, such as for example a magnetic flow meter, is provided at a desired position between the outlet of the container 2 and the inlet of the second heat exchanger 15. In an embodiment, pressure indicators (sensors) are also provided. A least one pressure indicator (sensor) is provided between the outlet of the feed pump 5 and the inlet of the cavitator 10. In an embodiment, there is provided a pressure indicator (sensor) between the feed pump 5 and the first heat exchanger 7 and between the first heat exchanger 7 and the cavitator 10. In an embodiment, another pressure indicator is provided between the cavitator 10 and the second heat exchanger 15. In an embodiment there are also temperature transmitters (sensors) in the container 2, along conduit 3, and in between the cavitator 10 and the second heat exchanger 15.
As more particularly shown in FIG. 2, the cavitator 10 according to the present invention a housing with a cavitation chamber 11 therein. A cavitator disk or wheel is rotatably suspended inside the cavitation chamber 11. In an embodiment, the cavitation disk 12 is driven by an electric drive motor 14, such as for example an AC or DC drive motor for spinning the cavitator disk at a desired rotational speed. A frequency converter 18 controls the DC motor 14. A controller 20, such as an electronic control unit receives the signals from the temperature sensors, the pressure sensors, the flow sensor and from a control panel 25 with a user interface that can be used by an operator. The controller 20 sends information from the sensors to the control panel 25 and the control panel 25 may in an embodiment be provided with a display to show the sensor information to an operator. The controller 20 also sends a DC motor speed control signal to the frequency controller 18. According to another embodiment the rotational speed of the cavitator 14 is controlled manually with a fixed speed, independent of the controller 20 signal received. FIG. 3 is a cross-sectional view of the cavitator 10 showing the outline of the cavitator disk or el 12 according to one embodiment. In this embodiment, the cavitator disk 12 is provided with a plurality of radially extending slots that cause controlled hydrodynamic cavitation in the fluid inside the cavitation chamber 11 when the cavitator disk 12 is spinning.
FIG. 4 is a cross-sectional view of the cavitator 10 showing the outline of the cavitator disk or wheel 12 according to another embodiment. In this embodiment, the cavitator disk 12 is provided with a plurality of holes (circular holes are shown, but elliptical or similar shapes are also possible) that cause controlled hydrodynamic cavitation in the fluid inside the cavitation chamber 11 when the cavitator disk 12 is spinning.

As otherwise discussed herein, the apparatus used in the inventive methods and systems can be useful for reversing or breaking an oil-in-water emulsion food product.
Returning to FIG. 1, the oil-in-water emulsion food product contained in the container 2 flows through conduit 3 to the inlet of the feed pump 5. The feed pump 5 feeds oil-in-water emulsion food product to the first heat exchanger 7, thereby causing a continuous flow of liquid through the apparatus 1. A heating fluid, such as for example water or steam, with a controlled temperature and flow rate flows also through the first heat exchanger 7. In the first heat exchanger, the oil-in-water emulsion is tempered to a desired temperature. In an embodiment, the oil-in-water emulsion is pasteurized and then tempered by means of the first heat exchanger 7.
From the first heat exchanger 7 the oil-in-water emulsion food product is pumped/fed to the hydrodynamic cavitation device 10 where it is subjected to hydrodynamic cavitation. The cavitator 10 can be the APV™ Cavitator sold and manufactured by SPX® Corporation, Charlotte, North Carolina, USA. The impact from the cavitation exposure either breaks or reverses the emulsion, leading to a continuous production of a single water-in-oil emulsion food product or to a continuous production of a single liquid wherein the watery component and the oily component previously forming the emulsion are no longer dispersed in one another, but phase-separated food product. The reversal or breaking up process is controlled by the e.g. the temperature of the oil-in-water emulsion entering the cavitator 10 and by the backpressure of the emulsion or the phase-separated emulsion leaving the cavitator 10. The process is also dependent on the composition of the oil-in-water emulsion, the temperature profile, the flow rate and on the characteristics and operation of the cavitator 10.

From the outlet of the cavitator 10, the single water-in-oil emulsion food product or the single phase-separated emulsion food product with a watery component and an oily component is pumped/fed via the backpressure valve 13 to the second heat exchanger 15. The backpressure valve 13 regulates the pressure of the fluid coming into the back pressure valve. The backpressure valve 13 is connected to the controller 20 and an operator can select the setting for the backpressure valve 13 via the operator panel 25.

The reversed emulsion or phase-separated emulsion is cooled by means of the second heat exchanger 15. Hereto, a cooling fluid, such as e.g. water, with a controlled temperature and flow rate is also flowed through the second heat exchanger 15.

Thus, the cavitation is used to reverse or break the oil-in-water emulsion food product into a single water-in-oil emulsion food product. The single food product emulsion coming out of the cavitator 10 and coming out of the apparatus has the same fat content and the same water content as the ingoing oil-in-water emulsion since the oily content and the watery content of the ingoing oil-in-water emulsion are not separated. This allows the production of a water-in-oil emulsion food product, such as e.g. a low fat butter in one step from cream. The fat content and the water content of the resulting low fat butter will be the same as the fat content and the water content of the ingoing cream.

As an example of a method according to an embodiment of the invention, a cream with a fat content of 48% (double cream) is pasteurized and tempered to approximately 15°C (10 - 20°C range) in the first heat exchanger 7 and pumped at 1800 L/H into the cavitation unit 10 (where it is reversed and a continuous production of low-fat butter is produced (water-in-oil emulsion). The backpressure leaving the cavitator 10 is within the range of 0,5 to 7,5 bar, preferably in the range of 1,5 to 5 bar. There is no separation of buttermilk, and thus a continuous flow of low fat (high water) butter comes out of the outlet of the second heat exchanger 15.

In an embodiment, vegetable oil is added to mix into the emulsion either before or after the reversal in the cavitator 10 in order to create a more flat crystallization profile that again will lead to a more stable product.

In another embodiment a low-fat spread emulsion is reversed in the cavitator 10 before the crystallization of the fat. The emulsion is thereafter crystalized in a scraped surface heat exchanger, such as the Perfector line of scraped surface heat exchangers sold by Gerstenberg Schröder, a part of SPX® Corporation.

In another embodiment the oil-in-water emulsion is fed directly in to the cavitator 10, without any heat exchangers 7,15 before and after the cavitator 10 and/or without the back pressure valve 13 after the cavitator. Also, in an embodiment the feed pump 5 is omitted, e.g. when if the cavitator 10 is fed by other means like gravity or from a pressurized tank.

In an embodiment, the oil-in-water emulsion food product that is fed to the cavitator 10 has a fat content range of 25 - 65%, preferably 35% to 50% and even more preferably 40% to 45%. The water-in-oil emulsion leaving the cavitator has the same fat content as the oil-in-water emulsion that is fed to the cavitator

In another embodiment, the oil-in-water emulsion food product that is fed to the cavitator 10 is a double cream, preferably a 48% double cream.

In an embodiment, the oil in the oil-in-water emulsion that is fed to the cavitator may be an animal fat or vegetable fat or a mixture of animal fat and vegetable fat. In an embodiment, the animal fat or vegetable fat is liquid, solid, inter-esterified, fractionated or hydrogenated.

In an embodiment, the emulsion pumped to the cavitator 10 contains water, milk, cream, and/or recombined liquids

Turning now to FIG. 5, another embodiment of the apparatus 1 is shown for reversing an oil-in-water emulsion food product and separating the liquid phases. The apparatus shown in FIG. 5 is essentially identical to the apparatus shown in FIG. 1, except that a separator 16 has been added after the second heat exchanger 15. The outlet of the second heat exchanger is connected by a conduit to the inlet of a separator 16 that has two outlets, one for each phase of the phase-separated emulsion.

In an embodiment, cream is pumped by the feed pump 5 from the container 2, through the first heat exchanger 7 and into the cavitator 10. The cream is tempered by the first heat exchanger 7 and the cream is broken into butter fat and butter milk in the cavitator 10 (such as e.g. the APV™ Cavitator sold and manufactured by SPX® Corporation, Charlotte, North Carolina, USA). The phase-separated liquid flows from the cavitator 10 via the backpressure valve 13 to the second heat exchanger 15 where it is cooled. From the second heat exchanger 15 the phase-separated liquid flows to the separator 16 and a continuous flow of buttermilk comes out of one of the outlets of the separator 16 and a continuous flow of butter fat comes out of the other outlet of the separator 16.
In an embodiment the cavitator 10 is provided with two outlets and the separation of the two fluids is performed in the cavitator 10. Alternatively, the cavitator and the separator are combined into one integrated machine.
In an embodiment the first heat exchanger 7 and the second heat exchanger 15 are one and the same so that the waste heat from the product downstream of the cavitator is reused for heating the product fed to the cavitator 10
The separator 16 can also work without a cooler 15 after the cavitator 10. The heat exchanger 15 can in an embodiment be a heater, since oil (not butter) is more efficient separated in a separator at high temperatures due to lower oil viscosities.

The invention has numerous advantages. Different embodiments or implementations may yield one or more of the following advantages. It should be noted that this is not an exhaustive list and there may be other advantages which are not described herein. One advantage of the invention is that it provides a simple method with only one step and continuous processing for reversing or breaking an oil-in-water emulsion food product and turning it into a single water-in-oil emulsion food product. It is another advantage of the invention that it leaves a small footprint. It is yet another advantage of the invention that it provides for an apparatus and method with low maintenance cost. It is yet another advantage of the invention that it provides for lower operating expenses for reversing or breaking an oil-in-water emulsion food product. It is yet another advantage of the invention that it provides improved product quality of reversed or broken oil-in-water emulsion food product. It is yet another advantage of the invention that it provides for flexible production of reversed or broken oil-in-water emulsion food product. It is yet another advantage of the invention that it provides for a low fat butter.

## Claims

1. A method for continuous reversal or breaking of an oil-in-water emulsion food product, said method comprising:
feeding a continuous flow of tempered oil-in-water emulsion food product into a cavitator (10) with a cavitator disk (12) that is rotatably suspended inside a cavitation chamber (11), causing cavitation in the tempered oil-in-water emulsion food product inside said cavitator (10) thereby breaking the oil-in-water emulsion food product or thereby reversing the oil-in-water emulsion food product to a water-in-oil emulsion food product,
discharging a single continuous flow of broken oil-in-water emulsion food product or a single continuous flow of reversed water-in-oil emulsion food product from said cavitator (10).

2. The method according to claim 1, wherein the tempered oil-in-water emulsion food product that is fed to the cavitator (10) is reversed into a water-in-oil emulsion food product by hydrodynamic cavitation inside the cavitator (10) and a single continuous flow of water-in-oil emulsion food product is coming out of said cavitator (10).

3. A method according to claim 1 or 2, further comprising adding and mixing vegetable oil into the emulsion either before or after the reversal in order to create a more flat crystallization profile of the resulting emulsion.

4. The method according to claim 1, wherein the tempered oil-in-water emulsion food product that is fed to the cavitator (10) is broken inside the cavitator (10) and the phase-separated emulsion food product that flows out of the cavitator (10) has an oily liquid component and a watery liquid component with the oily component and the watery component in a single emulsion.

5. The method according to any one of the preceding claims, wherein the single continuous flow of water-in-oil emulsion food product coming out of said cavitator (10) is cooled.

6. The method according to claim 1 or 2, wherein the oil-in-water emulsion food product that is fed into the cavitator (10) is pasteurized before entering the cavitator (10).

7. A method according to any of the preceding claims, wherein the backpressure of the emulsion leaving the cavitator (10) is within the range of 0,5 to 7,5 bar, preferably 1,5 to 5 bar.

8. A method according to any one of the preceding claims, wherein the oil-in-water emulsion food product that is fed to the cavitator (10) has a fat content in the range of 25 to 80%.

9. A method according to any one of the preceding claims, wherein the water-in-oil emulsion food product coming out of the cavitator (10) has a fat content that is equal to the fat content of the oil-in-water emulsion food product that is fed to the cavitator (10).

10. A method according to any one of the preceding claims, wherein the oil in the oil-in-water emulsion comprises an animal fat or vegetable fat or a mixture of animal fat and vegetable fat, preferably said animal fat or vegetable fat is liquid, solid, inter-esterified, fractionated or hydrogenated, and/or wherein the emulsion fed to the cavitator (10) contains water, milk, cream, and/or recombined liquids, and/or wherein the resulting water-in-oil emulsion is a low-fat butter or low-fat margarine.

11. A method according to any one of claims 3 to 10, wherein the emulsion fed to the cavitator (10) is a low-fat spread emulsion wherein the fat has not yet crystallized, and the low-fat spread emulsion is broken inside the cavitator (10).

12. An apparatus (1) for breaking or reversing an oil-in-water emulsion food product, said apparatus (1) comprising:
a source of pressurized oil-in-water emulsion food product,
a cavitator (10) with cavitation chamber (11) with a cavitator disk (12) that is rotatably suspended inside said cavitation chamber, said cavitation chamber being provided with an inlet and with an outlet, said inlet being in fluid connection with said source of pressurized oil-in-water emulsion food product,
a first heat exchanger (7) for tempering a flow of oil-in-water emulsion food product flowing to the inlet of said cavitator (10),
a second heat exchanger (15) for cooling the emulsion that is discharged from the outlet of said cavitator (10).

13. An apparatus (1) according to claim 12, wherein said cavitator (10) is configured for breaking the oil-in-water emulsion in the cavitation chamber (11) into a single water-in-oil emulsion or configured for reversing the oil-in-water emulsion in the cavitation chamber (11) into a single water-in-oil emulsion.

14. An apparatus (1) according to claim 12 or 13, further comprising a backpressure valve (13) arranged downstream of the cavitator (10) and configured for maintaining a desired backpressure at the outlet of said cavitator (10) so that said oil-in-water emulsion food product is either reversed or broken in said cavitator (10).

## Patentansprüche

1. Verfahren zur kontinuierlichen Umkehrung oder dem Aufbrechen eines Öl-in-Wasser-Emulsions-Nahrungsmittelproduktes, wobei das Verfahren Folgendes umfasst:
Zuführen eines kontinuierlichen Stroms von temperiertem Öl-in-Wasser-EmulsionsNahrungsmittelprodukt in einen Kavitator (10) mit einer Kavitatorscheibe (12), die drehbar in einer Kavitationskammer (11) aufgehängt ist, wodurch eine Kavitation in dem temperierten Öl-in-Wasser-Emulsions-Nahrungsmittelprodukt innerhalb des Kavitators (10) verursacht wird, wodurch das Öl-in-Wasser-Emulsionsnahrungsmittelprodukt gebrochen wird oder wodurch das Öl-in-Wasser-Emulsionsnahrungsmittelprodukt in ein Wasser-in-Öl-Emulsionsnahrungsmittelprodukt umgekehrt wird,
Entladen eines einzigen kontinuierlichen Stromes von aufgebrochenem Öl-in-Wasser-EmulsionsNahrungsmittelprodukt oder eines einzelnen Stromes von umgekehrtem Wasser-in-Öl-Emulsionsnahrungsmittelprodukt aus dem Kavitator (10).

2. Verfahren nach Anspruch 1, wobei das temperierte Öl-in-Wasser-Emulsions-Nahrungsmittelprodukt, das dem Kavitator (10) zugeführt wird, durch hydrodynamische Kavitation innerhalb des Kavitators (10) in ein Wasser-in-Öl-Emulsionsnahrungsmittelprodukt umgekehrt wird und ein einzelner kontinuierlicher Strom von Wasser-in-Öl-Emulsionsnahrungsmittelprodukt aus dem Kavitator (10) herauskommt.

3. Verfahren nach Anspruch 1 oder 2, ferner umfassend das Zugeben und Mischen von Pflanzenöl in die Emulsion entweder vor oder nach der Umkehrung, um ein flacheres Kristallisationsprofil der resultierenden Emulsion zu erzeugen.

4. Verfahren nach Anspruch 1, wobei das temperierte Öl-in-Wasser-Emulsions-Nahrungsmittelprodukt, das dem Kavitator (10) zugeführt wird, im Inneren des Kavitators (10) gebrochen wird, und dass das aus dem Kavitator (10) herausströmende phasengetrennte Emulsionsnahrungsmittelprodukt eine ölige flüssige Komponente und eine wässrige flüssige Komponente mit der öligen Komponente und der wässrigen Komponente in einer einzelnen Emulsion aufweist.

5. Verfahren nach einem der vorhergehenden Ansprüche, wobei der einzelne kontinuierliche Strom von Wasser-in-Öl-Emulsions-Nahrungsmittelprodukt, der aus dem Kavitator (10) herauskommt, gekühlt wird.

6. Verfahren nach Anspruch 1 oder 2, wobei das Öl-in-Wasser-Emulsions-Nahrungsmittelprodukt, das dem Kavitator (10) zugeführt wird, vor dem Eintritt in den Kavitator (10) pasteurisiert wird.

7. Verfahren nach einem der vorhergehenden Ansprüche, wobei der Gegendruck der den Kavitator (10) verlassenden Emulsion im Bereich von 0,5 bis 7,5 bar, vorzugsweise 1,5 bis 5 bar liegt.

8. Verfahren nach einem der vorhergehenden Ansprüche, wobei das Öl-in-Wasser-EmulsionsNahrungsmittelprodukt, das dem Kavitator (10) zugeführt wird, einen Fettgehalt im Bereich von 25 bis 80 % aufweist.

9. Verfahren nach einem der vorhergehenden Ansprüche, wobei das Wasser-in-Öl-EmulsionsNahrungsmittelprodukt, das aus dem Kavitator (10) herauskommt, einen Fettgehalt aufweist, der gleich dem Fettgehalt des Öl-in-Wasser-Emulsions-Nahrungsmittelproduktes ist, die dem Kavitator (10) zugeführt wird.

10. Verfahren nach einem der vorhergehenden Ansprüche, wobei das Öl in der Öl-in-Wasser-Emulsion ein tierisches Fett oder pflanzliches Fett oder ein Gemisch aus tierischem Fett und pflanzlichem Fett umfasst, wobei das tierische Fett oder pflanzliche Fett bevorzugt flüssig, fest, zwischenverestert, fraktioniert oder hydriert ist, und/oder wobei die Emulsion, die dem Kavitator (10) zugeführt wird, Wasser, Milch, Sahne und/oder rekombinierte Flüssigkeiten enthält, und/oder wobei die resultierende Wasser-in-Öl-Emulsion eine fettarme Butter oder eine fettarme Margarine ist.

11. Verfahren nach einem der Ansprüche 3 bis 10, wobei die Emulsion, die dem Kavitator (10) zugeführt wird, eine fettarme Aufstrich-Emulsion ist, wobei das Fett noch nicht kristallisiert ist, und wobei die fettarme Aufstrich-Emulsion in dem Kavitator (10) gebrochen wird.

12. Vorrichtung (1) zum Aufbrechen oder Umkehren eines oder ein Öl-in-Wasser-Emulsionsnahrungsmittelproduktes, wobei die Vorrichtung (1) Folgendes umfasst:
eine Quelle für das unter Druck stehende Öl-in-Wasser-Emulsions-Nahrungsmittelprodukt,
einen Kavitator (10) mit Kavitationskammer (11) mit einer Kavitatorscheibe (12), die drehbar im Innern der Kavitationskammer aufgehängt ist, wobei die Kavitationskammer mit einem Einlass und einem Auslass versehen ist, wobei der Einlass in Fluidverbindung mit der Quelle von unter Druck stehendem Öl-in-Wasser - Emulsionsnahrungsmittelprodukt ist,
einen ersten Wärmetauscher (7) zum Temperieren eines Stroms von Öl-in-Wasser-EmulsionsNahrungsmittelprodukt, das zum Einlass des Kavitators (10) fließt,
einen zweiten Wärmetauscher (15) zum Kühlen der Emulsion, die aus dem Auslass des Kavitators (10) ausgegeben wird.

13. Vorrichtung (1) nach Anspruch 12, wobei die Kavitator (10) zum Brechen der Öl-in-Wasser-Emulsion in der Kavitationskammer (11) in eine einzige Wasser-in-Öl-Emulsion konfiguriert ist oder zur Umkehr der Öl-in-Wasser-Emulsion in dem Kavitationskammer (11) in eine einzelne Wasser-in-Öl-Emulsion konfiguriert ist.

14. Vorrichtung (1) nach Anspruch 12 oder 13, die ferner ein Gegendruckventil (13) umfasst, das stromabwärts des Kavitator (10) angeordnet ist und konfiguriert ist, um einen gewünschten Gegendruck am Auslass des Kavitators (10) beizubehalten, so dass das Öl-in-Wasser-Emulsions-Nahrungsmittelprodukt entweder umgekehrt oder in dem Kavitator (10) gebrochen wird.

## Revendications

1. Procédé destiné à inverser ou à casser de manière continue un produit alimentaire à émulsion huile-dans-l'eau, ledit procédé comprenant :
alimenter un flux continu de produit alimentaire à émulsion huile-dans-l'eau tempéré à l'intérieur d'un dispositif de cavitation (10) comprenant un disque de cavitation (12) qui est suspendu de manière rotative à l'intérieur d'une chambre de cavitation (11), provoquant la cavitation dans le produit alimentaire à émulsion huile-dans-l'eau tempéré à l'intérieur dudit dispositif de cavitation (10) cassant ainsi le produit alimentaire à émulsion huile-dans-l'eau ou inversant ainsi le produit alimentaire à émulsion huile-dans-l'eau en un produit alimentaire à émulsion eau-dans-l'huile,
décharger un flux continu unique de produit alimentaire à émulsion huile-dans-l'eau cassé ou un flux continu unique de produit alimentaire à émulsion eau-dans-l'huile inversé à partir dudit dispositif de cavitation (10).

2. Procédé selon la revendication 1, dans lequel le produit alimentaire à émulsion huile-dans-l'eau tempéré qui est envoyé vers le dispositif de cavitation (10) est inversé à l'intérieur d'un produit alimentaire à émulsion eau-dans-l'huile à l'aide d'une cavitation hydrodynamique à l'intérieur du dispositif de cavitation (10) et un flux continu unique de produit alimentaire à émulsion eau-dans-l'huile sort dudit dispositif de cavitation (10).

3. Procédé selon la revendication 1 ou 2, consistant en outre à ajouter et à mélanger de l'huile végétale dans l'émulsion soit avant soit après l'inversion de façon à créer un profil de cristallisation plus plat de l'émission résultante.

4. Procédé selon la revendication 1, dans lequel le produit alimentaire à émulsion huile-dans-l'eau tempéré qui est envoyé vers le dispositif de cavitation (10) est cassé à l'intérieur du dispositif de cavitation (10) et le produit alimentaire à émulsion de phase séparée qui s'écoule depuis le dispositif de cavitation (10) possède un composant liquide huileux et un composant liquide aqueux avec le composant huileux et le composant aqueux dans une émulsion unique.

5. Procédé selon l'une quelconque des revendications précédentes, dans lequel le flux continu unique de produit alimentaire à émulsion eau-dans-l'huile sortant dudit dispositif de cavitation (10) est refroidi.

6. Procédé selon la revendication 1 ou la revendication 2, dans lequel le produit alimentaire à émulsion huile-dans-l'eau qui est envoyé à l'intérieur du dispositif de cavitation (10) est pasteurisé avant d'entrer dans le dispositif de cavitation (10).

7. Procédé selon l'une quelconque des revendications précédentes, dans lequel la contre-pression de l'émulsion s'échappant du dispositif de cavitation (10) est comprise dans la gamme allant de 0,5 à 7,5 bar, de préférence comprise entre 1,5 et 5 bars.

8. Procédé selon l'une quelconque des revendications précédentes, dans lequel le produit alimentaire émulsion huile-dans-l'eau qui est envoyé vers le dispositif de cavitation (10) possède une teneur en matières grasses comprise dans la gamme allant de 25 à 80 %.

9. Procédé selon l'une quelconque des revendications précédentes, dans lequel le produit alimentaire à émulsion eau-dans-l'huile sortant du dispositif de cavitation (10) possède une teneur en matières grasses qui est égale à la teneur en matières grasses du produit alimentaire à émulsion huile-dans-l'eau qui est envoyée vers le dispositif de cavitation (10).

10. Procédé selon l'une quelconque des revendications précédentes, dans lequel l'huile dans l'émulsion huile-dans-l'eau comprend une graisse animale ou une graisse végétale ou un mélange de graisse animale et de graisse végétale, de préférence ladite graisse animale ou graisse végétale est liquide, solide, inter-estérifiée, fractionnée ou hydrogénée, et/ou dans lequel l'émulsion envoyée aux dispositifs de cavitation (10) contient de l'eau, du lait, de la crème, et/ou des liquides recombiner, et/ou dans lequel l'émulsion eau-dans-l'huile résultante consiste en un beurre à faible teneur en matières grasses ou en une margarine à faible teneur en matières grasses.

11. Procédé selon l'une quelconque des revendications 3 à 10, dans lequel l'émulsion envoyée vers le dispositif de cavitation (10) consiste en une émulsion de pâte à tartiner à faible teneur en matières grasses dans laquelle la graisse n'a pas encore cristallisé, et l'émulsion de pâte à tartiner à faible teneur en matières grasses est cassée à l'intérieur du dispositif de cavitation (10).

12. Appareil (1) destiné à casser ou à inverser un produit alimentaire à émulsion huile-dans-l'eau, ledit appareil (1) comprenant :
une source de produit alimentaire à émulsion huile-dans-l'eau pressurisée,
un dispositif de cavitation (10) comprenant une chambre de cavitation (11) avec un disque de cavitation (12) qui est suspendu de manière rotative à l'intérieur de ladite chambre de cavitation, ladite chambre de cavitation étant dotée d'une entrée et d'une sortie, ladite entrée étant en connexion fluidique avec ladite source de produit alimentaire à émulsion huile-dans-l'eau pressurisée,
un premier échangeur de chaleur (7) pour tempérer un écoulement de produit alimentaire à émulsion huile-dans-l'eau s'écoulant vers l'entrée dudit dispositif de cavitation (10),
un second échangeur de chaleur (15) pour refroidir l'émulsion qui est déchargée depuis la sortie dudit dispositif de cavitation (10).

13. Appareil (1) selon la revendication 12, dans lequel ledit dispositif de cavitation (10) est configuré pour casser l'émulsion huile-dans-l'eau dans la chambre de cavitation (11) à l'intérieur d'une émulsion eau-dans-l'huile unique ou configuré pour inverser l'émulsion huile-dans-l'eau dans la chambre de cavitation (11) à l'intérieur d'une émulsion eau-dans-l'huile unique.

14. Appareil (1) selon la revendication 12 ou 13, comprenant en outre une soupape de retenue (13) agencée en aval du dispositif de cavitation (10) et configurée pour maintenir une contre-pression souhaitée au niveau de la sortie dudit dispositif de cavitation (10) de sorte que ledit produit alimentaire à émulsion huile-dans-l'eau est soit inversé soit cassé dans ledit dispositif de cavitation (10).
